# EUROPEAN PATENT APPLICATION

(11) **EP 4 383 444 A1**
(43) Date of publication of application: **12.06.2024**
(21) Application number: 23212054.3
(22) Date of filing: 24.11.2023
(51) Int. Cl.: H01M 50/569, H01M 10/48, H01M 10/42, H01M 50/572, H01M 50/284, H01M 50/107, H01M 10/04

(54) **BATTERY PACK AND METHOD OF OPERATING THE SAME**

(30) Priority: 05.12.2022 US 202218061891
(71) Applicant: Techtronic Cordless GP, Anderson, SC 29621 (US)
(72) Inventor: NGUYEN, Anh, Anderson, 29621 (US); REMOR, Jose, Anderson, 29621 (US); MELING, Daniel, Anderson, 29621 (US); LI, Sheng Ping, Dongguan City (CN)
(74) Representative: Meissner Bolte Partnerschaft mbB

(57) **Abstract**

A battery pack that provides a visual indication in response to an input. The battery pack includes a housing, a battery cell contained within the housing, a first printed circuit board (PCB) within the housing, an output interface provided on the first PCB, an indicator provided on the first PCB, a second PCB within the housing, a switch provided on the second PCB, a temperature sensor provided on the second PCB, and a controller positioned on the first PCB. The controller is operable to receive an input signal from at least one of the output interface and the switch, determine a condition based on the input signal, and provide, in response to determining the condition, a visual indication via the indicator.

## Description

### FIELD

Embodiments described herein relate to battery packs.

### SUMMARY

Battery packs may provide power from battery cells to an external device. However, the status of the battery cell(s) within the battery pack may be unknown to a user using the battery pack. For example, a user may couple a device to a battery pack to provide charging power to the device and only then realize that the battery cell(s) is depleted of power. As another example, a user may intend to charge the battery cell(s) of the battery pack and after waiting an amount of time, only then realize the charging connection was faulty and/or interrupted, thus leaving the user without an intended amount of charge in the battery cell(s) of the battery pack. As yet another example, a user may wish to provide charge from the battery cell(s) of the battery pack to a device and after waiting an amount of time, only then realize the battery cell(s) is depleted of charge and unable to provide adequate charging power to the device. Accordingly, there is a need for a battery pack that includes a fuel gauge indicator that indicates a battery cell status to a user. It would be advantageous to provide a fuel gauge on the battery pack that may provide a visual indication of the status of the battery cell(s) within the battery pack to the user based on an input. Additionally, it would be advantageous to provide a fuel gauge actuator (e.g., a button) on a surface of the battery pack for on-demand status-updates (for example, via a visual indication) of the battery cell.

Embodiments described herein provide systems and methods directed to a battery pack providing a visual indication in response to an input. In one embodiment, a battery pack includes a housing, a battery cell contained within the housing, a first printed circuit board (PCB) within the housing, an output interface provided on the first PCB, an indicator provided on the first PCB, a second PCB within the housing, a switch provided on the second PCB, a temperature sensor provided on the second PCB, and a controller positioned on the first PCB. The controller is operable to receive an input signal from at least one of the output interface and the switch, determine a condition based on the input signal, and provide, in response to determining the condition, a visual indication via the indicator.

In another embodiment, a method of providing a visual indication on a battery pack is provided. The method includes receiving, at an electronic processor, an input signal from at least one selected from a group consisting of an output interface provided on the battery pack and a switch provided on the battery pack, determining, at the electronic processor, a condition based on the input signal, and providing, from the electronic processor, in response to determining the condition, a first visual indication via an indicator provided on the battery pack. The output interface is provided on a first printed circuit board (PCB) and the switch is provided on a second PCB

In yet another embodiment, a single cell battery pack is provided. The single-cell battery pack includes a housing, wherein the cell is provided within the housing, a first printed circuit board (PCB) within the housing, an output interface, an indicator, a second PCB within the housing, a switch, and a controller positioned on the first PCB. The controller is operable to receive an input signal from at least one of the output interface and the switch, determine a condition based on the input signal, and provide, in response to determining the condition, a visual indication via the indicator.

Before any embodiments are explained in detail, it is to be understood that the embodiments are not limited in its application to the details of the configuration and arrangement of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on non-transitory computer-readable medium) executable by one or more processing units, such as a microprocessor and/or application specific integrated circuits ("ASICs"). As such, it should be noted that a plurality of hardware and software based devices, as well as a plurality of different structural components, may be utilized to implement the embodiments. For example, "servers," "computing devices," "controllers," "processors," etc., described in the specification can include one or more processing units, one or more computer-readable medium modules, one or more input/output interfaces, and various connections (e.g., a system bus) connecting the components.

Relative terminology, such as, for example, "about," "approximately," "substantially," etc., used in connection with a quantity or condition would be understood by those of ordinary skill to be inclusive of the stated value and has the meaning dictated by the context (e.g., the term includes at least the degree of error associated with the measurement accuracy, tolerances [e.g., manufacturing, assembly, use, etc.] associated with the particular value, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10%, or more) of an indicated value.

It should be understood that although certain drawings illustrate hardware and software located within particular devices, these depictions are for illustrative purposes only. Functionality described herein as being performed by one component may be performed by multiple components in a distributed manner. Likewise, functionality performed by multiple components may be consolidated and performed by a single component. In some embodiments, the illustrated components may be combined or divided into separate software, firmware and/or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable communication links. Similarly, a component described as performing particular functionality may also perform additional functionality not described herein. For example, a device or structure that is "configured" in a certain way is configured in at least that way but may also be configured in ways that are not explicitly listed.

Other aspects of the embodiments will become apparent by consideration of the detailed description and accompanying drawings.

### BRIEF DESCRIPTION OF THE DRAWINGS

FIG. 1A is a front perspective view a battery pack in accordance with embodiments described herein.
FIG. 1B is a rear perspective view of the battery pack of FIG. 1A in accordance with embodiments described herein.
FIG. 2 is is a perspective view of a power tool in accordance with embodiments described herein.
FIG. 3 is a battery pack and device system diagram in accordance with embodiments described herein.
FIG. 4 is a front view of an interior shell of the battery pack of FIG. 1A in accordance with embodiments described herein.
FIG. 5 illustrates a first internal view of the battery pack of FIG. 1A in accordance with embodiments described herein.
FIG. 6 illustrates a second internal view of the battery pack of FIG. 1A in accordance with embodiments described herein.
FIG. 7A illustrates a first perspective view of a first printed circuit board (PCB) assembly of the battery pack of FIG. 1A in accordance with embodiments described herein.
FIG. 7B illustrates a second perspective view of the first PCB assembly of FIG. 7A in accordance with embodiments described herein.
FIG. 7C illustrates a third perspective view of the first PCB assembly of FIG. 7A in accordance with embodiments described herein.
FIG. 8A illustrates a first perspective view of a second PCB assembly of the battery pack of FIG. 1A in accordance with embodiments described herein.
FIG. 8B illustrates a second perspective view of the second PCB assembly of FIG. 8A in accordance with embodiments described herein.
FIG. 8C illustrates a third perspective view of the second PCB assembly of FIG. 8A in accordance with embodiments described herein.
FIG. 9 illustrates a circuit diagram of the battery pack of FIG. 1A in accordance with embodiments described herein.
FIG. 10 is a flowchart illustrating a method of providing a visual indication in accordance with embodiments described herein.
FIG. 11 is a flowchart illustrating a method of providing a visual indication when the battery pack is charging in accordance with embodiments described herein.
FIG. 12 is a flowchart illustrating a method of providing a visual indication when a failure has occurred while the battery pack is charging in accordance with embodiments described herein.
FIG. 13 is a flowchart illustrating a method of providing a visual indication when charging of the battery pack is complete in accordance with embodiments described herein.
FIGS. 14A & 14B are flowcharts illustrating a method of providing a visual indication when the fuel gauge button of the battery pack is depressed in accordance with embodiments described herein.
FIGS. 15A & 15B are flowcharts illustrating a method of providing a visual indication when of the battery pack is providing charging power to a device in accordance with embodiments described herein.

### DETAILED DESCRIPTION

Embodiments described herein provide systems and methods directed to a battery pack providing a visual indication in response to an input. In one embodiment, a battery pack includes a housing, a battery cell contained within the housing, a first printed circuit board (PCB) within the housing, an output interface provided on the first PCB, an indicator provided on the first PCB, a second PCB within the housing, a switch provided on the second PCB, a temperature sensor provided on the second PCB, and a controller positioned on the first PCB. The controller is operable to receive an input signal from at least one of the output interface and the switch, determine a condition based on the input signal, and provide, in response to determining the condition, a visual indication via the indicator.

In another embodiment, a method of providing a visual indication on a battery pack is provided. The method includes receiving, at an electronic processor, an input signal from at least one selected from a group consisting of an output interface provided on the battery pack and a switch provided on the battery pack, determining, at the electronic processor, a condition based on the input signal, and providing, from the electronic processor, in response to determining the condition, a first visual indication via an indicator provided on the battery pack. The output interface is provided on a first printed circuit board (PCB) and the switch is provided on a second PCB

In yet another embodiment, a single cell battery pack is provided. The single-cell battery pack includes a housing, wherein the cell is provided within the housing, a first printed circuit board (PCB) within the housing, an output interface, an indicator, a second PCB within the housing, a switch, and a controller positioned on the first PCB. The controller is operable to receive an input signal from at least one of the output interface and the switch, determine a condition based on the input signal, and provide, in response to determining the condition, a visual indication via the indicator.

By providing a visual indication of a charge status of a battery cell of a battery pack and/or a charge power left in the battery cell of the battery pack, several advantages are achieved. The battery pack may provide a user an on-demand power status when a fuel gauge button is depressed, thus allowing a user to conveniently plan out any charging and/or discharging of the battery pack.

The above-highlighted techniques and advantages for providing a visual indication of the charge power left in the battery cell of the battery pack can be implemented for any battery pack where such visual indication techniques would be beneficial.

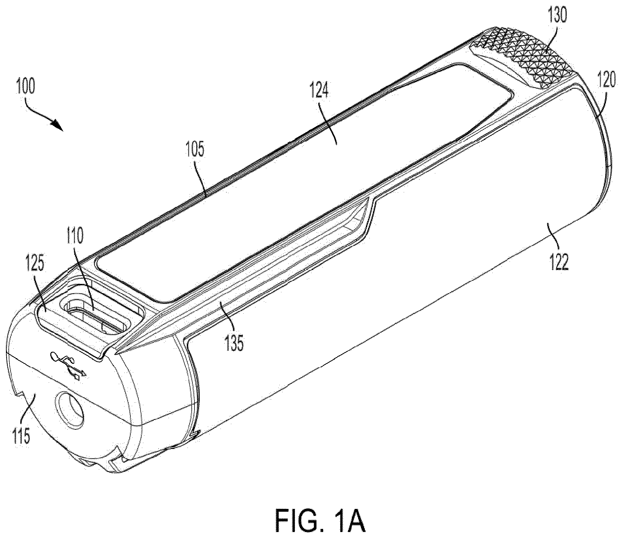

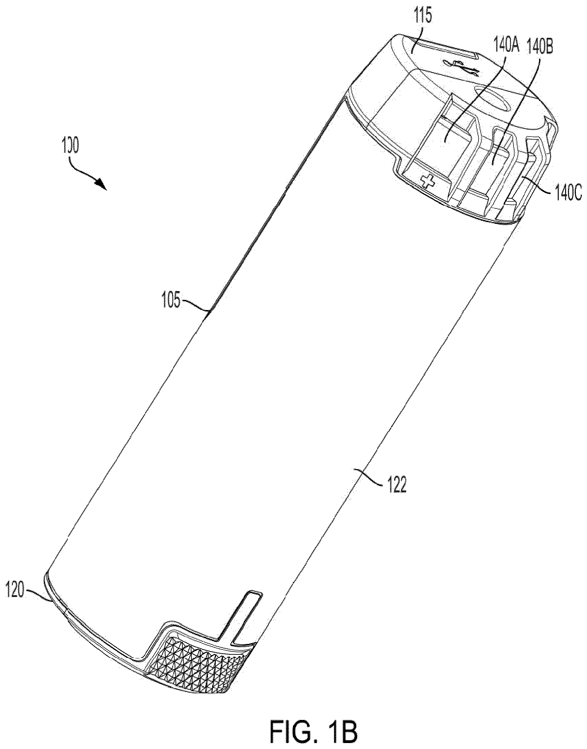

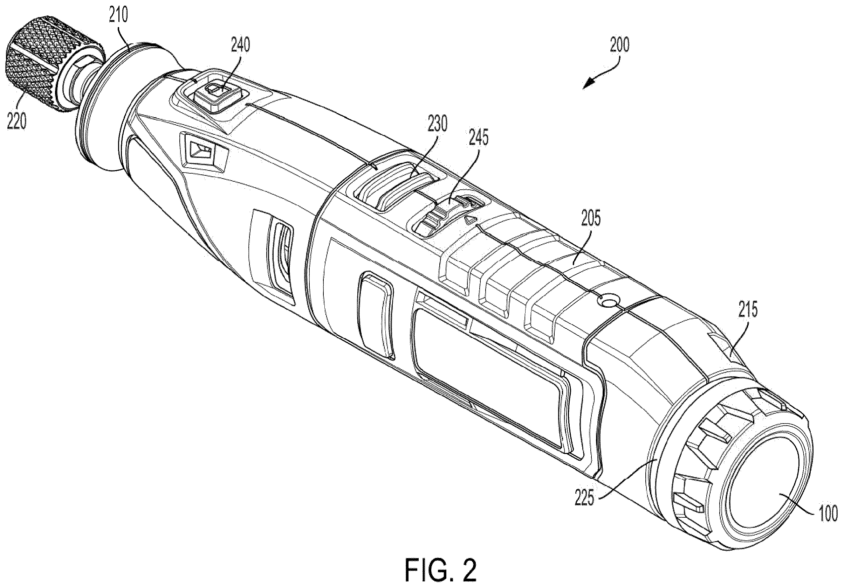

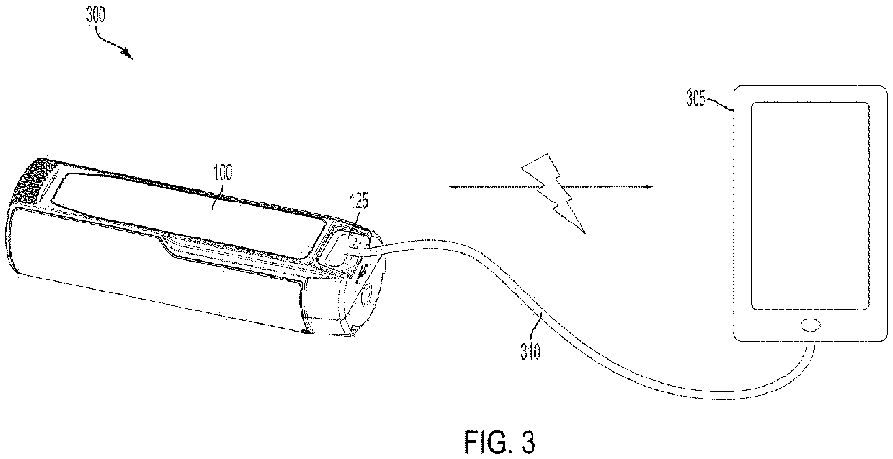

FIG. 1A illustrates a first perspective view of a battery pack 100 according to some embodiments. In the illustrated embodiment, the battery pack 100 is a compact battery pack that is generally used to provide power to a device, such as power tool 200 (FIG. 2) or device 305 (FIG. 3). The battery pack 100 may include a housing 105 and an interface portion 110 (and/or terminals 140 of FIG. 1B) for connecting the battery pack 100 to a device (e.g., the power tool 200 and/or the device 305). In the illustrated embodiment, the housing 105 includes a first circular face 115 at a first end, a second circular face 120 at a second end, a curved surface 122, and a flat surface 124. The curved surface 122 and the flat surface 124 connect the first circular face 115 and the second circular face 120.

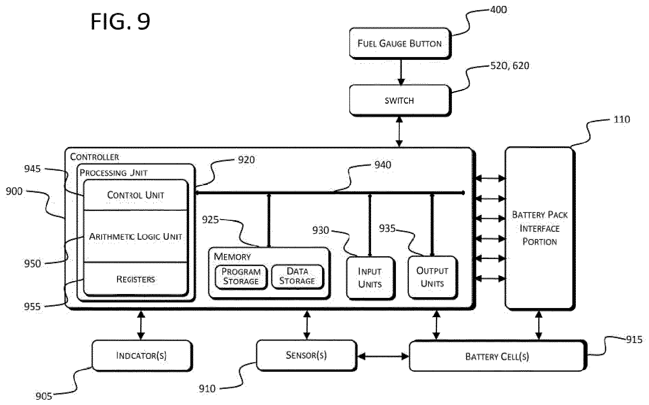

In the illustrated embodiment, a transparent window 125 surrounds the interface portion 110 at the first end of the flat surface 124. In some embodiments, the transparent window 125 provides a visual indication from color changing LED's, such as indicators 905 (FIG. 9), positioned inside the housing 105 of the battery pack 100. The interface portion 110 may be a direct current output, such as but not limited to, a universal serial bus (USB) interface for connecting the battery pack 100 with an external device with a USB connector. For example, the interface portion 110 may be a USB, USB-C, or USB-PD port. In the illustrated embodiment, the interface portion 110 is positioned perpendicular to the first circular face 115.

As illustrated, a bumper 130 may be provided at the second end of the flat surface 124. The bumper 130 may provide a seal between the battery pack 100 and the power tool 200, as shown in FIG. 2. A guide 135 may be provided at a connection point between the curved surface 122 and the flat surface 124 and may provide alignment between the battery pack 100 and the power tool 200. In the illustrated embodiment, a first indentation 138 is provided on the first circular face 115 as an additional alignment guide between the battery pack 100 and the power tool 200. The guide 135 and the first indentation 138 may also be a keying feature for the battery pack 100 and the power tool 200 to ensure correct alignment of the battery pack 100 within the power tool 200.

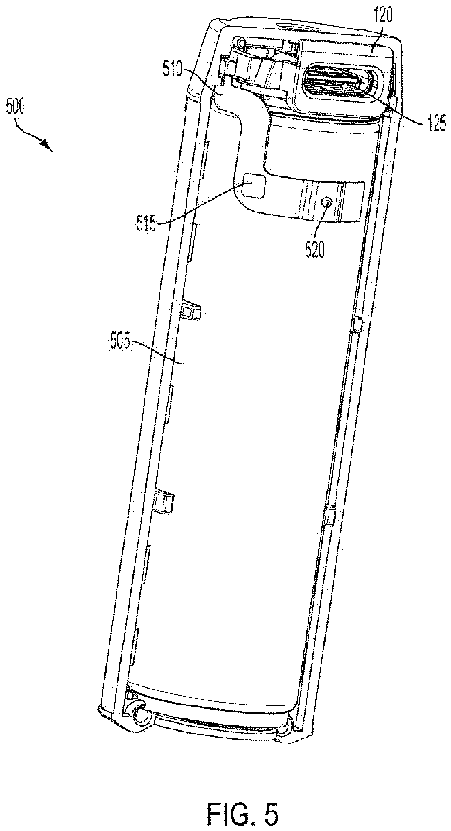

The battery pack 100 may include a single battery cell, such as battery cell 505 (FIG. 5). In some embodiments, the battery cell 505 may be a lithium ion battery cell. In other embodiments, the battery cell 505 may be of a different chemistry, for example, nickel-cadmium, nickel-metal hydride, and the like. In the illustrated embodiment, the battery pack 100 is a 4-volt battery pack. However, in other embodiments, the output voltage level of the battery pack 100 may be different, for example, the battery pack 100 can be a 28-volt battery pack, a 40-volt battery pack, or another voltage. The battery pack 100 may also have various capacities (e.g., 3, 4, 5, 6, 8, or 12 ampere-hours). In some embodiments, the battery cell may be replaceable and/or rechargeable.

FIG. 1B illustrates a second perspective view of the battery pack 100 according to some embodiments. The battery pack 100 may include terminals 140A, 140B, 140C for providing an electrical connection between the battery pack 100 and the power tool 200. In some embodiments, more or less than three terminals 140A, 140B, 140C may be provided. As illustrated, the terminals 140A, 140B, 140C may be provided perpendicular to the first circular face 115 at the first end of the battery pack 100. Furthermore, the terminals 140A, 140B, 140C may be provided on an opposite side from the interface portion 110. In some embodiments, only some of the terminals 140A, 140B, 140C may be engageable by terminals of the power tool 200.

FIG. 2 illustrates the power tool 200 according to some embodiments. The power tool 200 may be configured to perform one or more specific tasks (e.g., filing, drilling, fastening, pressing, impacting, etc.). For example, a rotary tool is associated with the task of generating a rotational output (e.g., to file down a material). The task(s) associated with a particular tool may also be referred to as the primary function(s) of the tool. The particular power tool device 200 illustrated and described herein (e.g., a rotary tool) is merely representative. Other embodiments may include a variety of power tools. Power tools can include, but are not limited to, drills, circular saws, jig saws, band saws, reciprocating saws, screw drivers, angle grinders, straight grinders, hammers, multi-tools, impact wrenches, rotary hammers, impact drivers, angle drills, powered ratchets, powered torque wrenches, hydraulic pulse tools, hydraulic tensioning tools, lock bolt installation tools, reaction arm tools, riveting tools, nailers, staplers, TC bolt guns, and the like.

The power tool 200 illustrated in the embodiment of FIG. 2 is a rotary tool. The power tool 200 may include a housing 205 with a battery pack receptacle 210 at a first end 215 and a tool bit 220 at a second end 225. The battery pack receptacle 210 may receive a battery pack, such as battery pack 100. An actuator 230, a speed dial 235, and a tool lock button 240 may also be provided on the housing 205. The actuator 230 may be a toggle switch that sends a signal to a motor within the power tool 200 to output a rotational force to the tool bit 220.

FIG. 3 illustrates a battery pack 100 and external device system 300 according to some embodiments. The system 300 may include the battery pack 100 and an external device 305 (e.g., a mobile phone, computer, tablet, etc.). The battery pack 100 may be electrically connected to the external device 305 via a connection cable 310 electrically connected to the battery pack 100 at the interface portion 110. In some embodiments, charging power may be provided from the battery pack 100 to the external device 305. Alternatively, or additionally, in some embodiments, charging power may be provided from the external device 305 to the battery pack 100. For example, in some embodiments, external device 305 may be a power supply (e.g., a charging block) configured to output power to the battery pack 100.

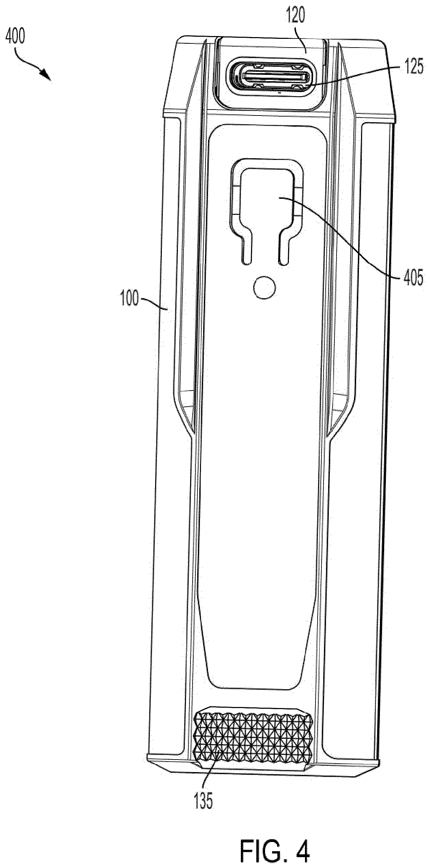

FIG. 4 illustrates an interior shell 405 of the battery pack 100 according to some embodiments. A fuel gauge button 400 may be provided on the interior shell 405 beneath an exterior shell of the housing 105. In some embodiments, the fuel gauge button 400 is provided on the top half (e.g., proximate to the interface portion 110) of the flat surface 124 of the battery pack 100. However, other locations of the fuel gauge button 400 are contemplated. The fuel gauge button 400 may be depressed by a user to activate a switch, such as switch 520 (FIG. 5), which provides a signal to a controller, such as controller 900 (FIG. 9), to provide a visual indication of the amount of charge of the battery cell within the battery pack 100. The fuel gauge button 400 may be easily depressed when a force is applied to the housing 105 substantially near the fuel gauge button 400 along the flat surface 124. A cutout along the perimeter of the fuel gauge button 400 may be provided for easy depression of the fuel gauge button 400. In some embodiments, a portion of the housing 105 proximate the fuel gauge button 400 may be a comprised of a flexible material for easy depression of the fuel gauge button 400 by the user.

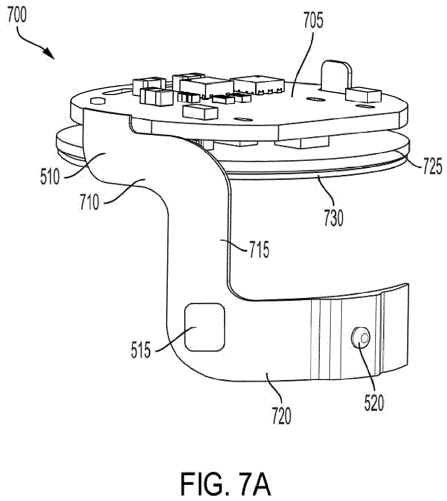

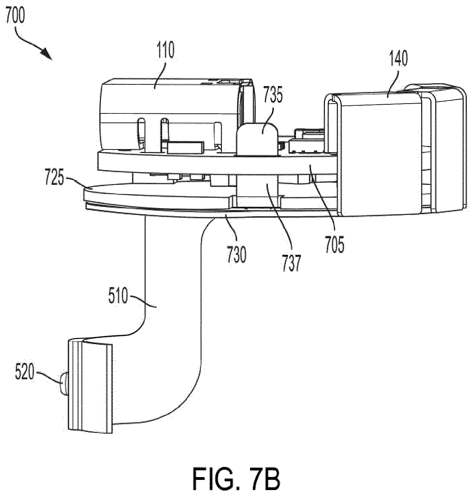

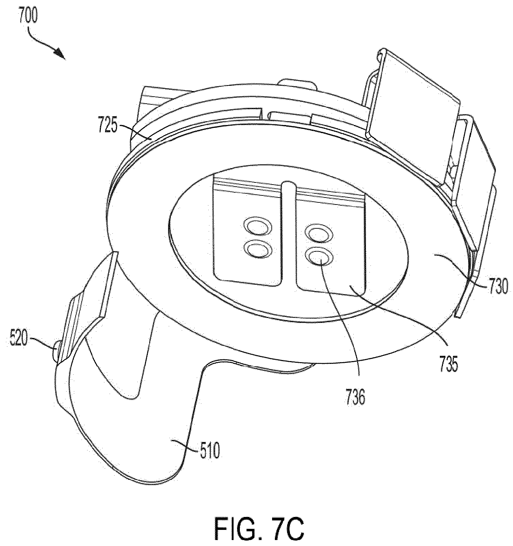

FIG. 5 illustrates a first internal view 500 of the battery pack 100, according to a first embodiment. As illustrated, the battery cell 505 may be positioned within the housing 105 of the battery pack 100, beneath the interior shell 405. Also within the housing 105 of the battery pack 100 may be a flexible printed circuit board (FPCB) 510 and a printed circuit board (PCB), such as PCB 705 (FIG. 7). The FPCB 510 may be molded around an outer circumference of the battery cell 505 and may be substantially "L-shaped". The PCB 705 may be positioned at a first end of the battery cell 505 and may be perpendicular to a longitudinal axis of the battery cell 505.

The FPCB 510 includes a temperature sensor 515 and the switch 520. The temperature sensor 515 may be a negative temperature coefficient thermistor (NTC) or a positive temperature coefficient thermistor (PTC). The temperature sensor 515 may determine the temperature of the battery cell 505. In some embodiments, the temperature sensor 515 outputs a temperature signal indicative of the temperature of the battery cell 505, such temperature signal may then be output to a controller (for example, controller 900 of FIG. 9). The switch 520 is actuated when the fuel gauge button 400 is depressed. When actuated, the switch 520 sends an electronic signal to a controller, such as controller 900 (FIG. 9), to provide a visual indication of an amount of charge of the battery cell 505.

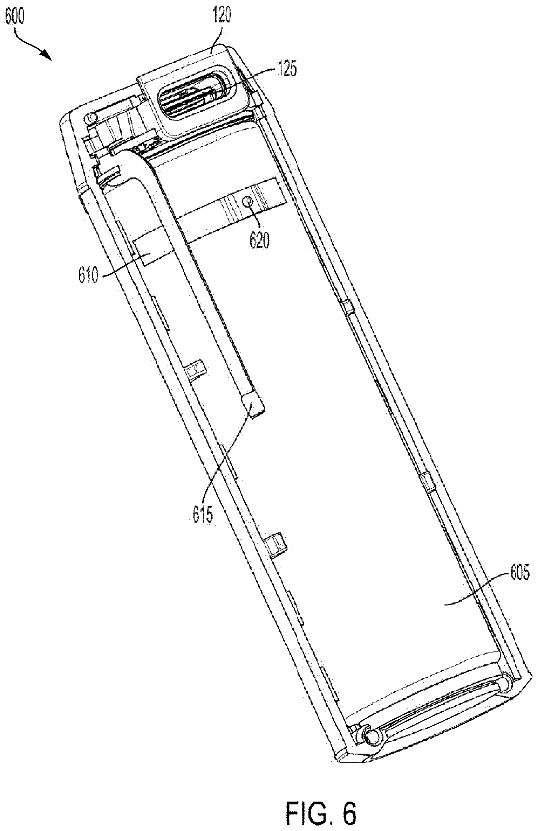

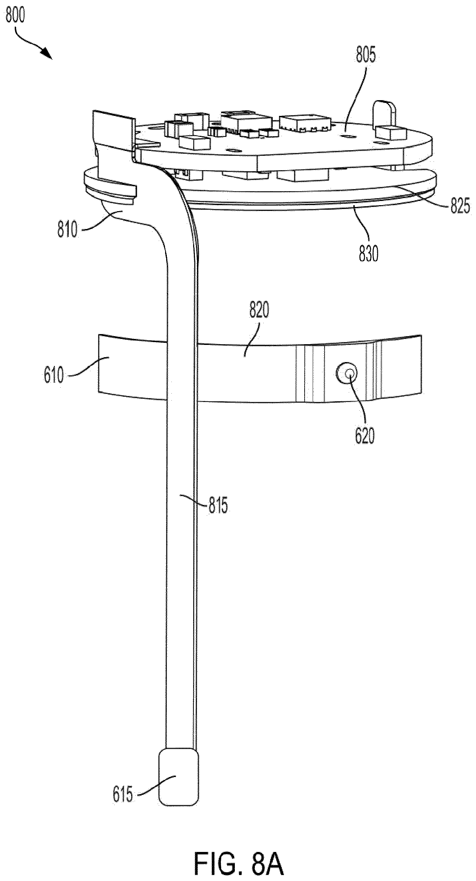

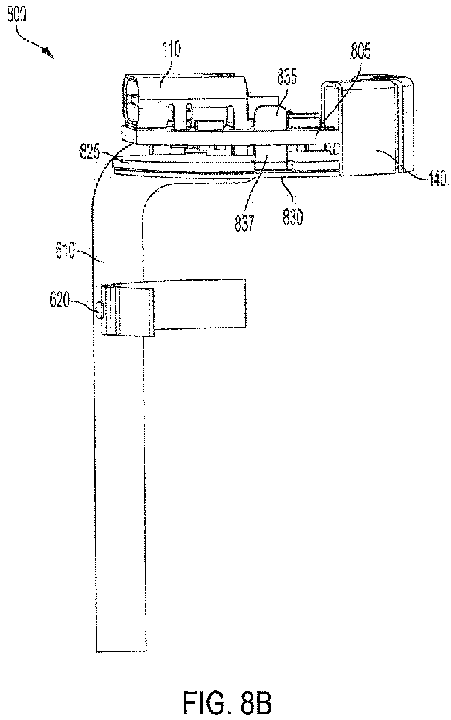

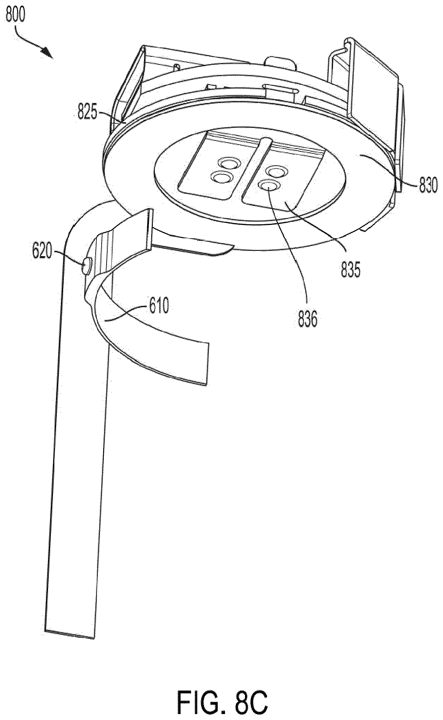

FIG. 6 illustrates a second internal view 600 of the battery pack 100, according to a second embodiment. Similar to the first internal view 500, the second internal view 600 includes a battery cell 605 positioned within the housing of the battery pack 100. In some embodiments, battery cell 605 is substantially similar to battery cell 505. Additionally, an FPCB 610 and a PCB 805 (FIG. 8) may be provided within the housing 105 of the battery pack 100. The PCB 805 may be positioned at a first end of the battery cell 605 and may be perpendicular to a longitudinal axis of the battery cell 605. The FPCB 610 may be molded around an outer circumference of the battery cell 605 and may be substantially "t-shaped" and may include one or two flexible printed circuit boards that are joined together forming the FPCB 610. The FPCB 610 includes a temperature sensor 615 and a switch 620. The temperature sensor 615 may be a NTC or a PTC and may sense the temperate of the battery cell 605. In some embodiments, the temperature sensor 615 outputs a temperature signal indicative of the temperature of the battery cell 605, such temperature signal may then be output to a controller, such as controller 900 (FIG. 9). The switch 620 may send an electronic signal to a controller (for example, controller 900 of FIG. 9) to provide a visual indication of an amount of charge of the battery cell 605 when actuated in response to the fuel gauge button 400 being depressed.

FIG. 7A is a first perspective view of a first PCB assembly 700 corresponding to the first internal view 500 of the battery pack 100, according to some embodiments. The first PCB assembly 700 includes the FPCB 510 and the PCB 705. The PCB 705 may be coin-shaped and include surface mounted circuit components on a first side of the PCB 705.. The FPCB 510 may be electrically connected to the PCB 705 at an outer edge of the PCB 705 and extend perpendicularly from the PCB 705. The FPCB 510 may be a continuous circuit board with a first arm 710, a second arm 715, and a third arm 720. The first arm 710 and the third arm 720 are parallel to one another and connected via the second arm 715, which is perpendicular to the first arm 710 and the third arm 720. The third arm 720 may be curved to conform to the exterior of the battery cell 505. In some embodiments, the temperature sensor 515 is provided at an intersection of the second arm 715 and the third arm 720. In some embodiments, the switch 520 is provided at a middle portion of the third arm 720. The switch 520 may send an electrical signal to a controller when depressed via the fuel gauge button 400.

The first PCB assembly 700 may further include an insulation layer 725 and a support ring 730 adjacent to one another. The insulation layer 725 and the support ring 730 may be parallel to and spaced from the PCB 705. In some embodiments, the insulation layer 725 is a foam material. For example the insulation layer 725 may thermally and/or electrically insulate the PCB 705 from the battery cell 505. In some embodiments, the support ring 730 is a metal material that is adhered to the bottom of the insulation layer 725. The support ring 730 may provide support and rigidity to the insulation layer 725.

FIG. 7B is a second perspective view of the first PCB assembly 700, according to some embodiments. A PCB assembly terminal 735 may include a first terminal component 736 (FIG. 7C) on a bottom side (e.g., closest to the battery cell 505) of the insulation layer 725 and a second terminal component 737 that may be through mounted on the PCB 705. For example, the first terminal component 736 of the PCB assembly terminal 735 is provided on the bottom side of the insulation layer 725 and the second terminal component 737 is bent upwards 90° relative to the first terminal component 736 within a gap formed in the insulation layer 725 and through the PCB 705 to form an electrical connection from the PCB 705 to the battery cell 505. The battery pack terminals 140 may be electrically connected to the PCB assembly terminal 735 to output power from the battery cell 505 to a device, such as the power tool 200. In some embodiments, the battery pack terminals 140 may physically contact the second terminal component 737.

FIG. 7C is a third perspective view of the first PCB assembly 700, according to some embodiments. In some embodiments, an axial space is provided between the support ring 730 and the first terminal component 736 of the PCB assembly terminal 735. For example, the support ring 730 may not physically contact the PCB assembly terminal 735, thereby mitigating any electrical connection between the support ring 730 and the PCB assembly terminal 735.

FIG. 8A is a first perspective view of a second PCB assembly 800 corresponding to the second internal view 600 of the battery pack 100, according to some embodiments. The second PCB assembly 800 includes the FPCB 610 and the PCB 805. The PCB 805 may be coin-shaped and include surface mounted circuit components on a first side of the PCB 805. The FPCB 610 may be electrically connected to the PCB 805 at an outer edge of the PCB 805 and extend perpendicularly from the PCB 805. The FPCB 610 may be a continuous circuit board with a first arm 810, a second arm 815, and a third arm 820. The first arm 810 and the third arm 820 are parallel to one another and connected via the second arm 815, which is perpendicular to the first arm 810 and the third arm 820. In some embodiments, the second arm 815 may intersect the third arm 820 such that a portion of the third arm 820 extends in a first direction and a second direction from the intersection with the second arm 815. The third arm 820 may be curved to conform to the exterior of the battery cell 605. In some embodiments, the temperature sensor 615 is provided at an intersection of the second arm 815 and the third arm 820. In some embodiments, the switch 620 is provided near a first end portion of the third arm 820. The switch 620 may send an electrical signal to a controller, such as controller 900 (FIG. 9), when depressed via the fuel gauge button 400.

The second PCB assembly 800 may further include an insulation layer 825 and a support ring 830 adjacent to one another. The insulation layer 825 and the support ring 830 may be parallel to and spaced from the PCB 805. In some embodiments, the insulation layer 825 is a foam material. For example the insulation layer 825 may thermally and/or electrically insulate the PCB 805 from the battery cell 505. In some embodiments, the support ring 830 is a metal material that is adhered to the bottom of the insulation layer 825. The support ring 830 may provide support and rigidity to the insulation layer 825.

FIG. 8B is a second perspective view of the second PCB assembly 800, according to some embodiments. A PCB assembly terminal 835 may include a first terminal component 836 (FIG. 8C) on a bottom side (e.g., closest to the battery cell 505) of the insulation layer 825 and a second terminal component 837 that may be through mounted on the PCB 805. For example, the first terminal component 836 of the PCB assembly terminal 835 is provided on the bottom side of the insulation layer and the second terminal component 837 is bent upwards 90° relative to the first terminal component 836 within a gap formed in the insulation layer 825 and through the PCB 805 to form an electrical connection from the PCB 805 to the battery cell 505. The battery pack terminals 140 may be electrically connected to the PCB assembly terminal 835 to output power from the battery cell 505 to a device, such as the power tool 200. In some embodiments, the battery pack terminals 140 may physically contact the second terminal component 837.

FIG. 8C is a third perspective view of the second PCB assembly 800, according to some embodiments. In some embodiments, an axial space is provided between the support ring 830 and the first terminal component 836 of the PCB assembly terminal 835. For example, the support ring 830 may not physically contact the PCB assembly terminal 835, thereby mitigating any electrical connection between the support ring 830 and the PCB assembly terminal 835.

FIG. 9 is a block diagram of a controller system, including controller 900, of the battery pack 100, according to some embodiments. The controller 900 is electrically and/or communicatively connected to a variety of modules or components of the battery pack 100. For example, the illustrated controller 900 is connected to indicators 905, sensors 910 (which may include, for example, current sensors, voltage sensors, temperature sensor 515, 615, etc.), battery cell(s) 915 (which may include battery cells 505, 605), switch 520, 620, and the interface portion 110. In some embodiments, the controller is provided on the PCB 705, 805.

The controller 900 includes a plurality of electrical and electronic components that provide power, operational control, and protection to the components and modules within the controller 900 and/or battery pack 100. For example, the controller 900 includes, among other things, a processing unit 920 (e.g., a microprocessor, an electronic processor, an electronic controller, a microcontroller, or another suitable programmable device), a memory 925, input units 930, and output units 935. The processing unit 920 includes, among other things, a control unit 945, an arithmetic logic unit ("ALU") 950, and a plurality of registers 955 (shown as a group of registers in FIG. 5), and is implemented using one or more computer architectures (e.g., a modified Harvard architecture, a von Neumann architecture, etc.). The processing unit 920, the memory 925, the input units 930, and the output units 935, as well as the various modules connected to the controller 900 are connected by one or more control and/or data buses (e.g., common bus 940). The control and/or data buses are shown generally in FIG. 9 for illustrative purposes. The use of one or more control and/or data buses for the interconnection between and communication among the various modules and components would be known to a person skilled in the art in view of the embodiments described herein.

The memory 925 is a non-transitory computer readable medium and includes, for example, a program storage area and a data storage area. The program storage area and the data storage area can include combinations of different types of memory, such as a ROM, a RAM (e.g., DRAM, SDRAM, etc.), EEPROM, flash memory, a hard disk, an SD card, or other suitable magnetic, optical, physical, or electronic memory devices. The processing unit 920 is connected to the memory 925 and executes software instruction that are capable of being stored in a RAM of the memory 925 (e.g., during execution), a ROM of the memory 925 (e.g., on a generally permanent basis), or another non-transitory computer readable medium such as another memory or a disc. Software included in the implementation of the battery pack 100 can be stored in the memory 925 of the controller 900. The software includes, for example, firmware, one or more applications, program data, filters, rules, one or more program modules, and other executable instructions. The controller 900 (e.g., the electronic processor 920) is configured to retrieve from the memory 925 and execute, among other things, instructions related to the control processes and methods described herein. In other embodiments, the controller 900 includes additional, fewer, or different components.

The indicators 905 receive control signals from the controller 900 to turn ON and OFF or otherwise convey information based on different states of the battery pack 100. For example, the indicators 905 may display the power level of the battery cell 915, that the battery pack 100 is receiving charging power via the battery pack interface portion 110, that a failure has occurred during charging of the battery pack 100 (e.g., an overtemperature failure), that the battery cell 915 is fully charged when a power sable is connected to the battery pack interface portion 110, and/or that an external device is receiving charging power from the battery pack 100. The indicators 905 may be positioned on the PCB 705, 805 and, when illuminated, provide a visual indication through the transparent window 125. In the illustrated embodiment, the indicators 905 include one or more light-emitting diodes (LEDs). In some embodiments, the indicators 905 may include one or more LEDs and/or a display screen (e.g., an LCD display). The indicators 905 may illuminate in multiple colors (e.g., red, green, orange, white, etc.). The indicator(s) 905 may also include additional elements to convey information to a user through audible or tactile outputs (e.g., a speaker). The indicator(s) 905 may also be referred to as an output device configured to provide an output to a user. In some embodiments, the indicators may not provide a visual indication in response to the battery pack 100 being in an idle mode (e.g., no charging power received/provided).

The battery pack interface portion 110 is connected to the controller 900 and couples the battery pack 100 to an external device, such as external device 305 (FIG. 3). The battery pack interface portion 110 may include electrical components configured to and operable for interfacing (e.g., mechanically, electrically, and communicatively connecting) the battery pack 100 with the external device 305. The battery pack interface portion 110 may transmit the power from the battery cell 915 to the external device 305 or from the external device 305 to the battery cell 915. In some embodiments, the battery pack interface portion 110 includes active and/or passive components (e.g., voltage step-down controllers, voltage converters, rectifiers, filters, etc.) to regulate or control the power transmitted to/from the external device 305.

The sensors 910 provide signals to the controller 900 based on sensed conditions. For example, a current sensor may determine that the battery pack 100 is providing charging power to the external device 305, the current sensor may determine that the battery pack 100 is receiving charging power from the external device, a voltage sensor may determine the amount of charge of the battery cell 915, and a temperature sensor, such as temperature sensor 515, 615, may determine the temperature of the battery cell 915. The sensors 910 may be provided on the FPCB 510, 610 and/or the PCB 705, 805.

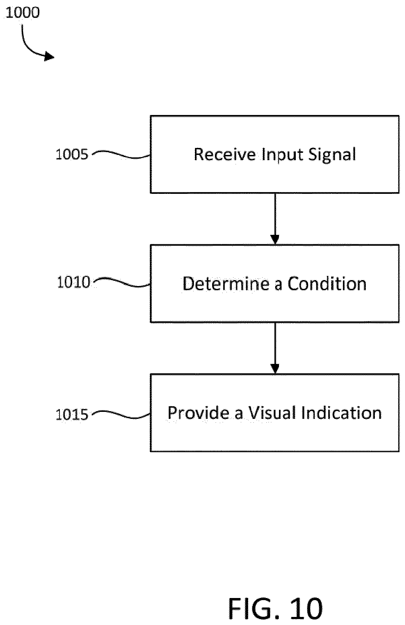

FIG. 10 is a method 1000 of providing a visual indication from the battery pack 100 according to some embodiments. Although the illustrated method 1000 include specific steps, not all of the steps need to be performed or need to be performed in the order presented. In some embodiments, the method 1000 is executed by the battery pack controller 900. Although the illustrated method 1000 is directed to the first PCB assembly 700, the second PCB assembly 800 may also implement the method, via the battery pack controller 900.

The method 1000 begins by the controller 900 receiving an input signal (step 1005). In some embodiments, the input signal is received from the switch 520. For example, a user may depress the fuel gauge button 400 which actuates the switch 520. Alternatively, or additionally, in some embodiments the input signal is received from a sensor 910 (e.g., current sensor, voltage sensor, temperature sensor, etc.).

In step 1010, the controller 900 determines a condition. Conditions may include, a fuel gauge inquiry, a charging-received status, or a charging-provided status. In some embodiments, the controller 900 may determine that the switch 520 has been actuated and a fuel gauge inquiry condition is determined. For example, in response to the user depressing the fuel gauge button 400 and the switch 520 providing an input signal, the controller 900 may determine a battery cell 915 voltage. The controller 900 may compare the battery cell 915 voltage received from a voltage sensor to threshold values. As another example, during charging of the battery pack 100, the controller 900 may determine a charge status (e.g., charging in-progress, charging complete, charging failure). As another example, during discharging of the battery cell 915, the controller 900 may determine a battery cell 915 voltage. The controller 900 may compare the battery cell 915 voltage received from a voltage sensor during discharge to threshold values.

In step 1015, the controller 900 provides a visual indication. The controller 900 provides a visual indication via the indicators 905 corresponding to the determined condition. In some embodiments, the conditions correspond to an indicator color and indicator state. For example, the indicators 905 may output one of a green, red, orange, or white color at a solid or blinking state. The indicator 905 blinking state may be between 0.5-1.5 seconds with half of the time being ON. The indicator may provide the visual indication between 2-4 seconds in response to the determined condition being a fuel gauge inquiry, regardless of a time of depression of the fuel gauge button 400.

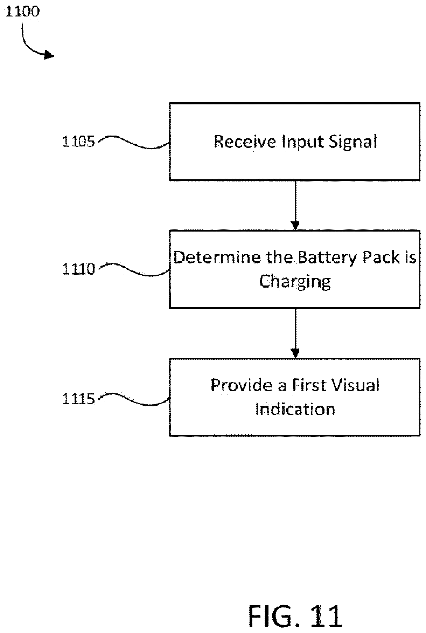

FIG. 11 is a method 1100 of providing a visual indication from the battery pack 100 when the battery pack 100 is being charged, according to some embodiments. Although the illustrated method 1100 include specific steps, not all of the steps need to be performed or need to be performed in the order presented. In some embodiments, the method 1100 is executed by the battery pack controller 900. Although the illustrated method 1100 is directed to the first PCB assembly 700, the second PCB assembly 800 may also implement the method, via the battery pack controller 900.

The method 1100 begins by the controller 900 receiving an input signal (step 1105). In some embodiments, the input signal is received from at least one of a current sensor and a voltage sensor. In step 1110, the controller 900 determines that the battery pack 100 is charging. In some embodiments, the controller 900 determines that the battery pack 100 is receiving a charging power based on a sensed current at the interface portion 110. Alternatively, or additionally, in some embodiments, the controller 900 determines that the battery pack 100 is receiving a charging power based on an increase in battery cell 915 voltage. In step 1115, the indicators 905 provide a first visual indication. In some embodiments, the first visual indication is a blinking, green output from the indicators 905.

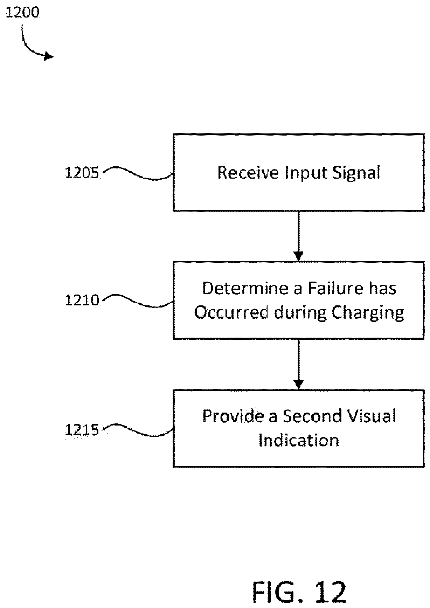

FIG. 12 is a method 1200 of providing a visual indication from the battery pack 100 when a failure occurs during charging of the battery pack 100, according to some embodiments. Although the illustrated method 1200 include specific steps, not all of the steps need to be performed or need to be performed in the order presented. In some embodiments, the method 1200 is executed by the battery pack controller 900. Although the illustrated method 1200 is directed to the first PCB assembly 700, the second PCB assembly 800 may also implement the method, via the battery pack controller 900.

The method 1200 begins by the controller 900 receiving an input signal (step 1205). In some embodiments, the input signal is received from a current sensor and a temperature sensor or a voltage sensor and a temperature sensor. In step 1210, the controller 900 determines that a failure has occurred during charging of the battery pack 100. In some embodiments, the controller 900 determines that the battery pack 100 is receiving a charging power based on a sensed current at the interface portion 110. Alternatively, or additionally, in some embodiments, the controller 900 determines that the battery pack 100 is receiving a charging power based on an increase in battery cell 915 voltage. In some embodiments, the controller 900 determines that a failure has occurred during charging based on an input from the temperature sensor 515. For example, the temperature sensor 515 may determine that an overtemperature condition is occurring when the temperature of the battery cell 915 is greater than an overtemperature threshold amount. In some embodiments, the controller 900 may determine that the charging cable is received by the interface portion 110, but no charging power is being provided to the battery cell 915. In step 1215, the indicators 905 provide a second visual indication. In some embodiments, the second visual indication is a blinking, red output from the indicators 905.

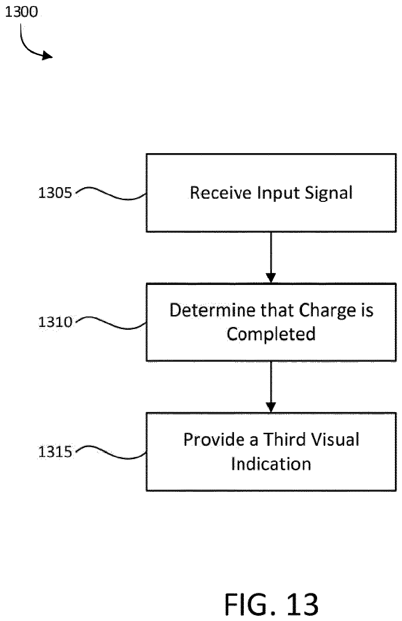

FIG. 13 is a method 1300 of providing a visual indication from the battery pack 100 when charging of the battery pack 100 is complete, according to some embodiments. Although the illustrated method 1300 include specific steps, not all of the steps need to be performed or need to be performed in the order presented. In some embodiments, the method 1300 is executed by the battery pack controller 900. Although the illustrated method 1300 is directed to the first PCB assembly 700, the second PCB assembly 800 may also implement the method, via the battery pack controller 900.

The method 1300 begins by the controller 900 receiving an input signal (step 1305). In some embodiments, the input signal is received from at least one of a current sensor and a voltage sensor. In step 1310, the controller 900 determines that charge of the battery pack 100 is complete. In some embodiments, the controller 900 also determines that a power cable is still received by the interface portion 110 when the charge is complete. In some embodiments, the controller 900 determines that the battery pack 100 is fully charged based on a decrease in sensed current at the interface portion 110 compared to a sensed current during charging. Alternatively, or additionally, in some embodiments, the controller 900 determines that the battery pack 100 is receiving a charging power based on a battery cell 915 voltage reaching a threshold amount. In step 1315, the indicators 905 provide a third visual indication. In some embodiments, the third visual indication is a solid, green output from the indicators 905.

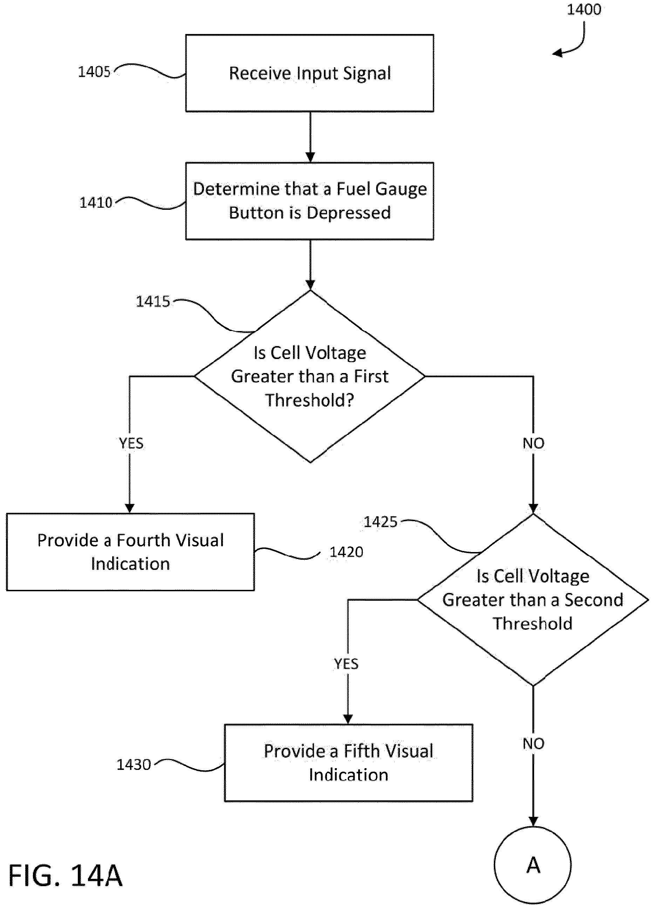

FIGS. 14A-14B are a method 1400 of providing a visual indication from the battery pack 100 when the fuel gauge button 400 is depressed, according to some embodiments. Although the illustrated method 1400 include specific steps, not all of the steps need to be performed or need to be performed in the order presented. In some embodiments, the method 1400 is executed by the battery pack controller 900. Although the illustrated method 1400 is directed to the first PCB assembly 700, the second PCB assembly 800 may also implement the method, via the battery pack controller 900.

The method 1400 begins by the controller 900 receiving an input signal (step 1405). In some embodiments, the input signal is received from the switch 520 in response to the fuel gauge button 400 being depressed by a user. In step 1410, the controller 900 determines that the fuel gauge button 400 was depressed by a user. For example, depression of the fuel gauge button 400 actuates the switch 520, which in response provides the input signal to the controller 900. In decision step 1415, the controller 900 compares the battery cell 915 voltage to a first threshold value. In some embodiments, the first threshold value is 3.4 volts + 0.5 volts. When the battery cell 915 voltage is greater than the first threshold (YES at decision step 1415), the method 1400 proceeds to step 1420. In step 1420, the indicators 905 provide a fourth visual indication. In some embodiments, the fourth visual indication is a solid, green output from the indicators 905.

When the battery cell 915 voltage is less than or equal to the first threshold value (NO at decision step 1415), the method proceeds to decision step 1425. At decision step 1425, the controller compares the battery cell 915 voltage to a second threshold value. In some embodiments, the second threshold value is 3.2 volts + 0.5 volts. When the battery cell 915 voltage is greater than the second threshold (YES at decision step 1425), the method 1400 proceeds to step 1430. In step 1430, the indicators 905 provide a fifth visual indication. In some embodiments, the fifth visual indication is a solid, orange output from the indicators 905.

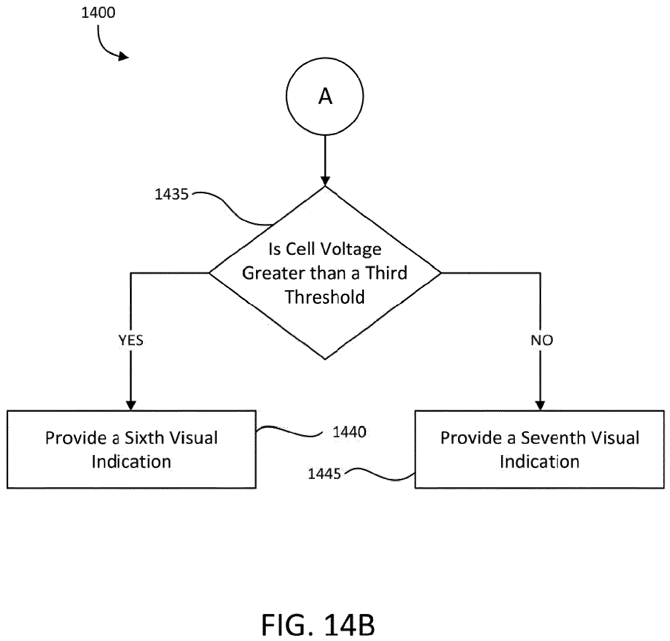

When the battery cell 915 voltage is less than or equal to the second threshold value (NO at decision step 1425), the method proceeds to decision step 1435 (FIG. 14B). At decision step 1435, the controller compares the battery cell 915 voltage to a third threshold value. In some embodiments, the third threshold value is 3.0 volts + 0.5 volts. When the battery cell 915 voltage is greater than the third threshold (YES at decision step 1435), the method 1400 proceeds to step 1440. In step 1440, the indicators 905 provide a sixth visual indication. In some embodiments, the sixth visual indication is a solid, red output from the indicators 905. When the battery cell 915 voltage is less than or equal to the third threshold value (NO at decision step 1435), the method proceeds to step 1445. In step 1445, the indicators 905 provide a seventh visual indication. In some embodiments, the seventh visual indication is a blinking, red output from the indicators.

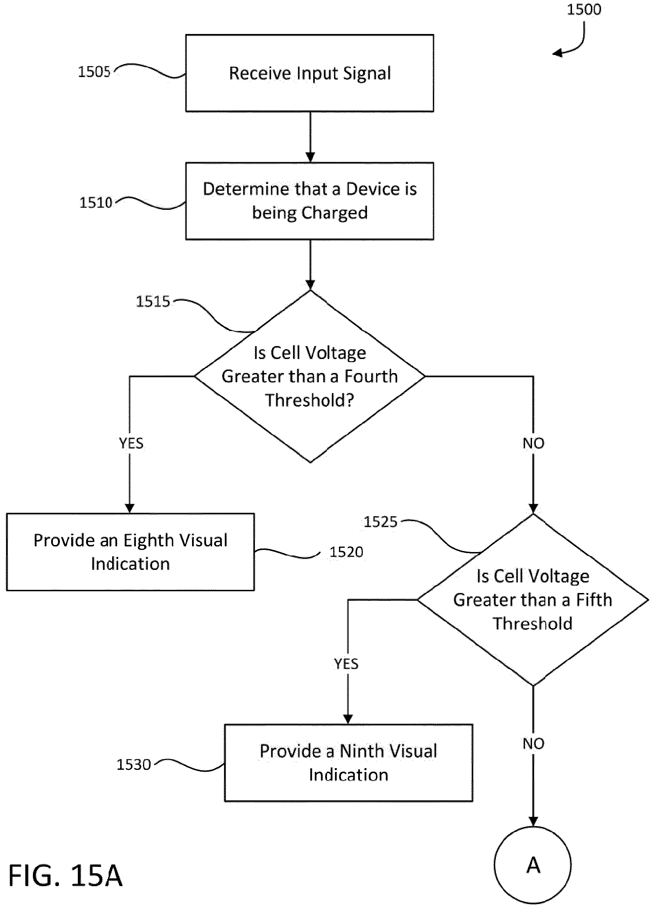

FIGS. 15A-15B are a method 1500 of providing a visual indication from the battery pack 100 when the battery pack 100 is charging an external device 305. Although the illustrated method 1500 include specific steps, not all of the steps need to be performed or need to be performed in the order presented. In some embodiments, the method 1500 is executed by the battery pack controller 900. Although the illustrated method 1500 is directed to the first PCB assembly 700, the second PCB assembly 800 may also implement the method, via the battery pack controller 900.

The method 1500 begins by the controller 900 receiving an input signal (step 1505). In some embodiments, the input signal is received from at least one of a current sensor and a voltage sensor. In step 1510, the controller 900 determines that a device 305 is being charged by the battery pack 100. In some embodiments, the controller 900 determines that the battery pack 100 is providing a charging power based on a sensed current at the interface portion 110. Alternatively, or additionally, in some embodiments, the controller 900 determines that the battery pack 100 is providing a charging power based on a decrease in battery cell 915 voltage. In decision step 1515, the controller 900 compares the battery cell 915 voltage to a fourth threshold value. In some embodiments, the fourth threshold value is 3.4 volts ± 0.5 volts. When the battery cell 915 voltage is greater than the fourth threshold (YES at decision step 1515), the method 1500 proceeds to step 1520. In step 1520, the indicators 905 provide an eighth visual indication. In some embodiments, the eighth visual indication is a solid, green output from the indicators 905.

When the battery cell 915 voltage is less than or equal to the fourth threshold value (NO at decision step 1515), the method proceeds to decision step 1525. At decision step 1525, the controller compares the battery cell 915 voltage to a fifth threshold value. In some embodiments, the fifth threshold value is 3.2 volts ± 0.5 volts. When the battery cell 915 voltage is greater than the fifth threshold (YES at decision step 1525), the method 1500 proceeds to step 1530. In step 1530, the indicators 905 provide a ninth visual indication. In some embodiments, the ninth visual indication is a solid, orange output from the indicators 905.

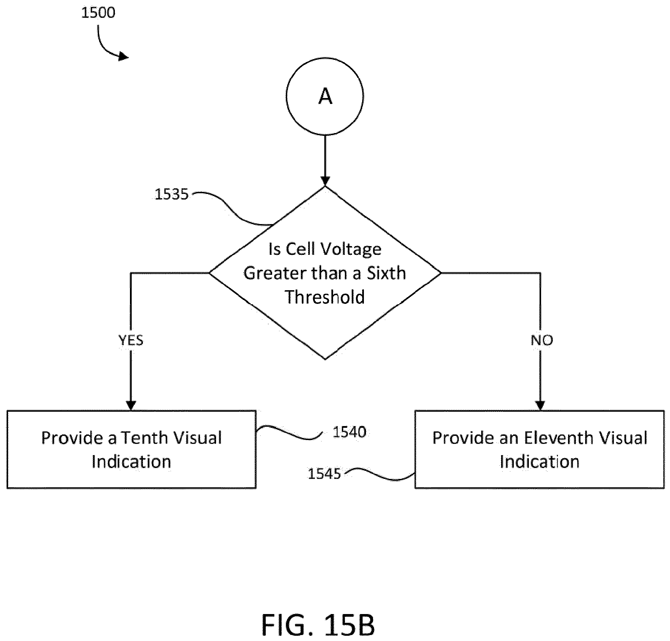

When the battery cell 915 voltage is less than or equal to the fifth threshold value (NO at decision step 1525), the method proceeds to decision step 1535 (FIG. 15B). At decision step 1535, the controller compares the battery cell 915 voltage to a sixth threshold value. In some embodiments, the sixth threshold value is 3.0 volts ± 0.5 volts. When the battery cell 915 voltage is greater than the sixth threshold value (YES at decision step 1535), the method 1500 proceeds to step 1540. In step 1540, the indicators 905 provide a tenth visual indication. In some embodiments, the tenth visual indication is a solid, red output from the indicators 905. When the battery cell 915 voltage is less than or equal to the sixth threshold value (NO at decision step 1535), the method proceeds to step 1545. In step 1545, the indicators 905 provide an eleventh visual indication. In some embodiments, the eleventh visual indication is a blinking, red output from the indicators.

Clause 1. A battery pack comprising: a housing; a battery cell contained within the housing; a first printed circuit board (PCB) within the housing; an output interface provided on the first PCB; an indicator provided on the first PCB; a second PCB within the housing; a switch provided on the second PCB; a temperature sensor provided on the second PCB; and a controller positioned on the first PCB and operable to: receive an input signal from at least one of the output interface and the switch, determine a condition based on the input signal, and provide, in response to determining the condition, a visual indication via the indicator.

Clause 2. The battery pack of clause 1, wherein the indicator is a color changing LED.

Clause 3. The battery pack of clause 2, wherein the output interface is surrounded on all sides by a transparent window, and wherein the LED provides the visual indication through the transparent window.

Clause 4. The battery pack of clause 1 further comprising: an insulation layer provided parallel to the first PCB, wherein a terminal that electrically connects to a positive terminal of the battery cell is provided on a bottom side of the insulation, and wherein the terminal bends and is provided through a gap of the insulation layer to contact the first PCB/

Clause 5. The battery pack of clause 1, wherein the second PCB is a flexible PCB, and wherein the second PCB contacts a curved surface of the battery cell.

Clause 6. The battery pack of clause 1, wherein the output interface is a universal serial bus (USB) port.

Clause 7. The battery pack of clause 1, wherein the housing is provided within a first end face, a second end face, a curved surface, and a flat surface, and wherein the curved surface and the flat surface are provided between the two end faces.

Clause 8. The battery pack of clause 1, wherein the input signal is received by the controller from the switch in response to a user actuating an actuator provided on the housing of the battery pack, and wherein the input signal is received by the controller from the output interface in response to a device being connected to the output interface.

Clause 9. A method of providing a visual indication on a battery pack, the method comprising: receiving, at an electronic processor, an input signal from at least one selected from a group consisting of an output interface provided on the battery pack and a switch provided on the battery pack; determining, at the electronic processor, a condition based on the input signal; and providing, from the electronic processor, in response to determining the condition, a first visual indication via an indicator provided on the battery pack, wherein the output interface is provided on a first printed circuit board (PCB) and the switch is provided on a second PCB.

Clause 10. The method of clause 9, wherein the input signal is received from the switch in response to a user actuating an actuator provided on a housing of the battery pack.

Clause 11. The method of clause 10, wherein determining, at the electronic processor, the condition includes: comparing a voltage of a battery cell of the battery pack to at least one of a first threshold value, a second threshold value, and a third threshold value, wherein the voltage of the battery cell is compared to the threshold values in successive order when a previous threshold is not satisfied.

Clause 12. The method of clause 11, wherein when the voltage is greater than the first threshold value, the first visual indication is provided, wherein when the voltage is less than the first threshold value and greater than the second threshold value, a second visual indication is provided, wherein when the voltage is less than the second threshold value and greater than the third threshold value, a third visual indication is provided, and wherein when the voltage is less than the third threshold value, a fourth visual indication is provided.

Clause 13. The method of clause 9, wherein the input signal is received from the output interface in response to one of a battery cell of the battery pack providing charging power to a first device, via the output interface, and the battery cell of the battery pack receiving charging power from a second device, via the output interface.

Clause 14. The method of clause 13, wherein determining, at the electronic processor, the condition includes: comparing, in response to providing charging power to the first device, a voltage of the battery cell to at least one of a first threshold value, a second threshold value, and a third threshold value, wherein the voltage of the battery cell is compared to the threshold values in successive order when a previous threshold is not satisfied.

Clause 15. The method of clause 13, wherein determining, at the electronic processor, the condition includes: determining, in response to receiving charging power from the second device, a charge status, wherein the charge status is one of in-progress, completed, and failure.

Clause 16. The method of clause 15, wherein when the charge status is in-progress, the first visual indication is provided, wherein when the charge status is completed, a second visual indication is provided, and wherein when the charge status is failure, a third visual indication is provided.

Clause 17. The method of clause 15, wherein the charge status is failure in response to the battery cell of the battery pack reaching an overtemperature threshold, as determined by a temperature sensor contacting the battery cell of the battery pack.

Clause 18. A single-cell battery pack comprising: a housing, wherein the cell is provided within the housing; a first printed circuit board (PCB) within the housing; an output interface; an indicator; a second PCB within the housing; a switch; and a controller positioned on the first PCB and operable to: receive an input signal from at least one of the output interface and the switch, determine a condition based on the input signal, and provide, in response to determining the condition, a visual indication via the indicator.

Clause 19. The single-cell battery pack of clause 18, wherein the first PCB is a coin-shaped printed circuit board and the second PCB is a flexible printed circuit board oriented substantially perpendicular to the first PCB.

Clause 20. The single-cell battery pack of clause 18, wherein the input signal is received by the controller from the switch in response to a user actuating an actuator provided on the housing of the single-cell battery pack, and wherein the input signal is received by the controller from the output interface in response to a device being connected to the output interface.

Thus, embodiments described herein provide, among other things, a battery pack a fuel gauge for providing a visual indication of a power level of a battery cell within the battery pack. Various features and advantages are set forth in the following claims.

## Claims

1. A battery pack comprising:
a housing;
a battery cell contained within the housing;
a first printed circuit board (PCB) within the housing;
an output interface provided on the first PCB;
an indicator provided on the first PCB;
a second PCB within the housing;
a switch provided on the second PCB;
a temperature sensor provided on the second PCB; and
a controller positioned on the first PCB and operable to:
receive an input signal from at least one of the output interface and the switch,
determine a condition based on the input signal, and
provide, in response to determining the condition, a visual indication via the indicator.

2. The battery pack of claim 1, wherein the output interface is surrounded on all sides by a transparent window, and wherein the indicator provides the visual indication through the transparent window.

3. The battery pack of claim 1 further comprising:
an insulation layer provided parallel to the first PCB,
wherein a terminal that electrically connects to a positive terminal of the battery cell is provided on a bottom side of the insulation, and
wherein the terminal bends and is provided through a gap of the insulation layer to contact the first PCB.

4. The battery pack of claim 1, wherein the second PCB is a flexible PCB, and wherein the second PCB contacts a curved surface of the battery cell.

5. The battery pack of claim 1, wherein the housing is provided within a first end face, a second end face, a curved surface, and a flat surface, and wherein the curved surface and the flat surface are provided between the two end faces.

6. The battery pack of claim 1, wherein the input signal is received by the controller from the switch in response to a user actuating an actuator provided on the housing of the battery pack, and wherein the input signal is received by the controller from the output interface in response to a device being connected to the output interface.

7. A method of providing a visual indication on a battery pack, the method comprising:
receiving, at an electronic processor, an input signal from at least one selected from a group consisting of an output interface provided on the battery pack and a switch provided on the battery pack;
determining, at the electronic processor, a condition based on the input signal; and
providing, from the electronic processor, in response to determining the condition, a first visual indication via an indicator provided on the battery pack,
wherein the output interface is provided on a first printed circuit board (PCB) and the switch is provided on a second PCB.

8. The method of claim 7, wherein the input signal is received from the switch in response to a user actuating an actuator provided on a housing of the battery pack.

9. The method of claim 8, wherein determining, at the electronic processor, the condition includes:
comparing a voltage of a battery cell of the battery pack to at least one of a first threshold value, a second threshold value, and a third threshold value,
wherein the voltage of the battery cell is compared to the threshold values in successive order when a previous threshold is not satisfied;
optionally when the voltage is greater than the first threshold value, the first visual indication is provided, wherein when the voltage is less than the first threshold value and greater than the second threshold value, a second visual indication is provided, wherein when the voltage is less than the second threshold value and greater than the third threshold value, a third visual indication is provided, and wherein when the voltage is less than the third threshold value, a fourth visual indication is provided.

10. The method of claim 7 wherein the input signal is received from the output interface in response to one of a battery cell of the battery pack providing charging power to a first device, via the output interface, and the battery cell of the battery pack receiving charging power from a second device, via the output interface.

11. The method of claim 10, wherein determining, at the electronic processor, the condition includes:
comparing, in response to providing charging power to the first device, a voltage of the battery cell to at least one of a first threshold value, a second threshold value, and a third threshold value,
wherein the voltage of the battery cell is compared to the threshold values in successive order when a previous threshold is not satisfied;
alternatively, wherein determining, at the electronic processor, the condition includes:
determining, in response to receiving charging power from the second device, a charge status,
wherein the charge status is one of in-progress, completed, and failure.

12. The method of claim 11, wherein when the charge status is in-progress, the first visual indication is provided, wherein when the charge status is completed, a second visual indication is provided, and wherein when the charge status is failure, a third visual indication is provided;
optionally, the charge status is failure in response to the battery cell of the battery pack reaching an overtemperature threshold, as determined by a temperature sensor contacting the battery cell of the battery pack.

13. A single-cell battery pack comprising:
a housing, wherein the cell is provided within the housing;
a first printed circuit board (PCB) within the housing;
an output interface;
an indicator;
a second PCB within the housing;
a switch; and
a controller positioned on the first PCB and operable to:
receive an input signal from at least one of the output interface and the switch,
determine a condition based on the input signal, and
provide, in response to determining the condition, a visual indication via the indicator.

14. The single-cell battery pack of claim 13, wherein the first PCB is a coin-shaped printed circuit board and the second PCB is a flexible printed circuit board oriented substantially perpendicular to the first PCB.

15. The single-cell battery pack of claim 13, wherein the input signal is received by the controller from the switch in response to a user actuating an actuator provided on the housing of the single-cell battery pack, and wherein the input signal is received by the controller from the output interface in response to a device being connected to the output interface.
